(19) Europäisches Patentamt
European Patent Office
Office européen des brevets

(11) Veröffentlichungsnummer : **0 364 495 B1**

(12) **EUROPÄISCHE PATENTSCHRIFT**

(45) Veröffentlichungstag der Patentschrift :
**18.09.91 Patentblatt 91/38**

(51) Int. Cl.⁵ : **B60S 1/24**

(21) Anmeldenummer : **88907102.3**

(22) Anmeldetag : **05.08.88**

(86) Internationale Anmeldenummer :
**PCT/DE88/00482**

(87) Internationale Veröffentlichungsnummer :
**WO 89/01886 09.03.89 Gazette 89/06**

(54) **WISCHVORRICHTUNG FÜR SCHEIBEN VON KRAFTFAHRZEUGEN.**

(30) Priorität : **27.08.87 DE 3728619**

(43) Veröffentlichungstag der Anmeldung :
**25.04.90 Patentblatt 90/17**

(45) Bekanntmachung des Hinweises auf die
Patenterteilung :
**18.09.91 Patentblatt 91/38**

(84) Benannte Vertragsstaaten :
**DE FR IT**

(56) Entgegenhaltungen :
**EP-A- 94 521**
**DE-A- 2 840 203**
**DE-A- 3 525 796**
**DE-B- 1 812 307**
**GB-A- 1 470 588**
**US-A- 3 808 629**

(73) Patentinhaber : **ROBERT BOSCH GmbH**
**Postfach 10 60 50**
**W-7000 Stuttgart 10 (DE)**

(72) Erfinder : **KÜHBAUCH, Gerd**
**Butzengrabenweg 6**
**W-7582 Bühlertal (DE)**

## Beschreibung

### Stand der Technik

Die Erfindung geht aus von einer Wischvorrichtung nach der Gattung des Hauptanspruchs. Bei einer bekannten Wischvorrichtung dieser Art (US-A-3808629) sorgt ein Elektromagnet als Antriebsvorrichtung der Stellvorrichtung für die Verdrehung der Exzenterbuchse und damit für die Überführung der Wischblätter in die jeweils gewünschte Position. Dabei ist ein erheblicher Aufwand erforderlich, um die jeweilige Betriebsstellung der Exzenterbuchse zu fixieren, auch wenn die Magnetspule des Elektromagneten stromlos ist. Auch ist die Schaltarbeit des Elektromagneten mit unerwünschten Geräuschen verbunden.

Es ist weiter bekannt (DE-A-3218373), auf einer zum Pendelgetriebe gehörenden Schwinge eine Stellvorrichtung anzuordnen und mit dieser die Gelenkstelle zwischen einer Schubstange und der Schwinge zu verstellen, so daß sich eine zusätzliche Schwenkbewegung des Wischblatts in die außerhalb des Wischfeldes liegende Ruhe- oder Parkstellung ergibt.

Diese Lösung erfordert aber zusätzlichen Raum, der im Bereich der Schwinge nicht zur Verfügung steht. Weiter ist bei dieser Lösung nachteilig, daß die Versorgungskabel der Stellvorrichtung die während des Wischbetriebs der Wischvorrichtung auftretende Pendelbewegung der Schwinge ausgleichen müssen und die Stellvorrichtung die zu bewegende Masse vergrößert.

### Vorteile der Erfindung

Die erfindungsgemäße Wischvorrichtung mit den kennzeichnenden Merkmalen des Hauptanspruchs hat demgegenüber den Vorteil, daß die Stellvorrichtung in die gestellfest angeordnete Antriebsvorrichtung integriert werden kann, so daß sich eine kompakte Antriebseinheit ergibt, welche auch die weiteren Probleme der bekannten Wischvorrichtungen löst.

Durch die in den Unteransprüchen aufgeführten Maßnahmen sind vorteilhafte Weiterbildungen und Verbesserungen der im Hauptanspruch angegebenen Wischvorrichtung möglich.

### Zeichnung

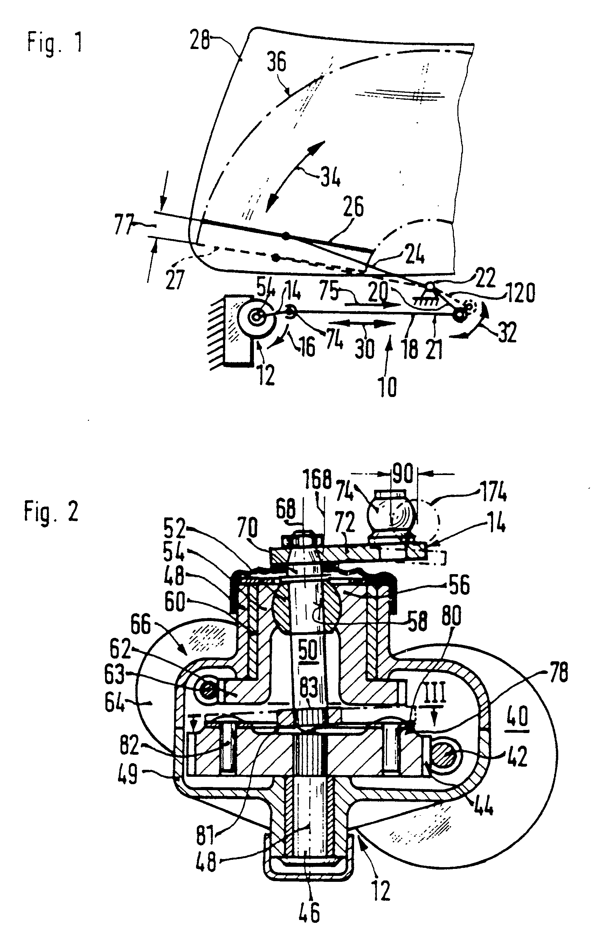

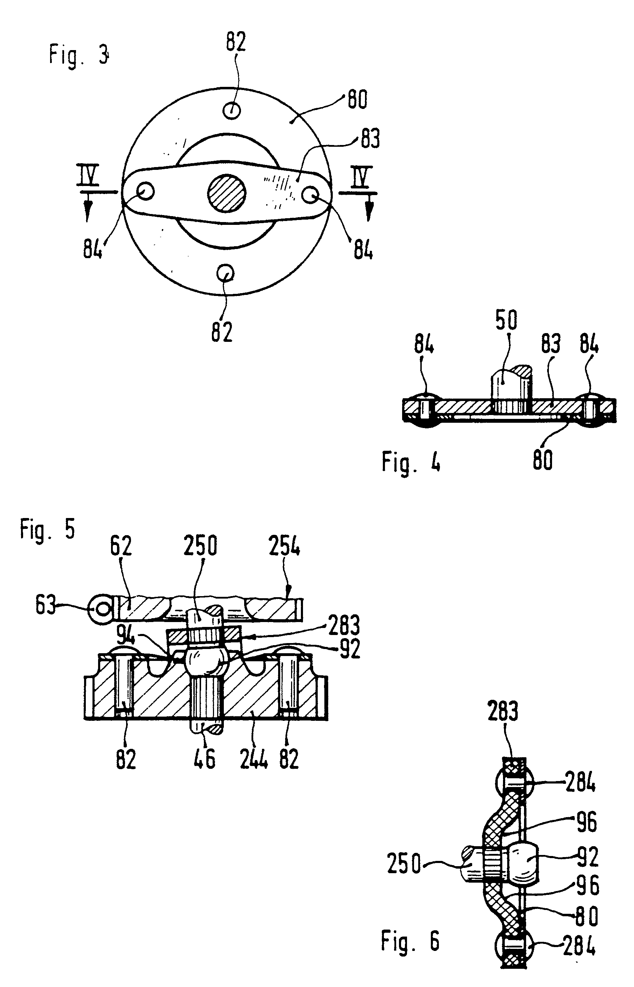

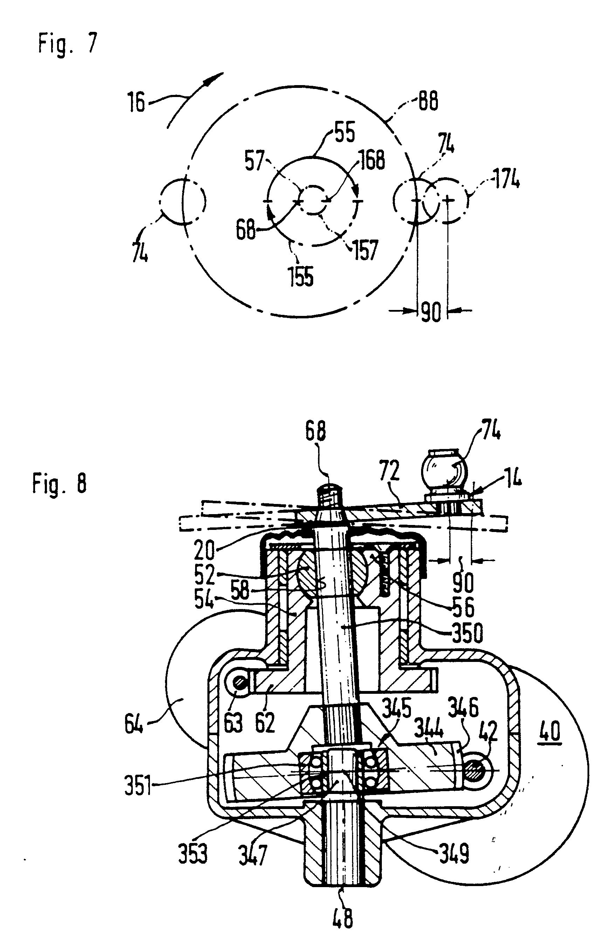

Ausführungsbeispiele der Erfindung sind in der Zeichnung dargestellt und in der nachfolgenden Beschreibung näher erläutert. Es zeigen Figur 1 eine Prinzipdarstellung einer Pendel-Wischvorrichtung, bei der das Wischblatt in einer außerhalb des Wischfeldes befindlichen Ruhe- oder Parkstellung abgelegt wird, Figur 2 einen Schnitt durch ein zu einer Antriebseinheit gehörendes Getriebe, in vergrößerter Darstellung, Figur 3 einen Teilschnitt durch das Getriebe entlang der Linie III-III in Figur 2, Figur 4 einen Schnitt durch die Anordnung gemäß Figur 3, entlang der Linie IV-IV, Figur 5 einen Teilschnitt gemäß Figur 2 durch ein anders ausgebildetes Getriebe, Figur 6 einen Schnitt gemäß Figur 4 durch die entsprechende Anordnung der in Figur 5 dargestellten Getriebeausführung, Figur 7 eine Prinzipdarstellung der Kurbelbewegung während des Wischbetriebs und der Kurbelposition bei abgelegtem Wischblatt und Figur 8 einen Schnitt gemäß Figur 2 durch eine weitere Ausführungsform der Erfindung.

### Beschreibung der Ausführungsbeispiele

Eine in Figur 1 dargestellte Wischvorrichtung 10 weist eine Antriebsvorrichtung 12 auf, welche eine Kurbel 14 in Richtung des Pfeiles 16 umlaufend antreibt. An der Kurbel 14 ist ein Ende einer Schubstange 18 angelenkt, deren anderes Ende gelenkig mit dem freien Ende einer Schwinge 20 verbunden ist. Das andere Ende der Schwinge ist an einer gestellfest gelagerten Pendelwelle 22 befestigt an der das eine Ende eines Wischerarms 24 angeordnet ist. Am anderen Ende des Wischerarms 24 ist ein Wischblatt 26 gehalten, das auf einer zu einem nicht dargestellten Kraftfahrzeug gehörenden Scheibe 28 anliegt. Wenn in Betrieb der Wischvorrichtung 10 die Kurbel 14 in Richtung des Pfeiles 16 umläuft, wird die Schubstange 18 in Richtung des Doppelpfeiles 30 bewegt, so daß die Schwinge 20 in Richtung des Doppelpfeiles 32 um die Achse der Pendelwelle 22 pendelt. Diese Pendelbewegung wird auch auf den Wischerarm 24 und damit auf das Wischblatt 26 übertragen, das dadurch in Richtung des Doppelpfeiles 34 über die Scheibe 28 pendelt und dabei ein Wischfeld überstreicht, welches mit 36 bezeichnet ist. Die Kurbel 14 bildet zusammen mit der Schubstange 18 und der Schwinge 20 ein Pendelgetriebe 21, welches die Abtriebs-Drehbewegung der Antriebsvorrichtung 12 in eine Pendelbewegung umwandelt, welche durch die Pfeile 32 und 34 angedeutet ist.

Die Antriebsvorrichtung 12 weist einen elektrischen Antriebsmotor 40 auf (Figur 2), dessen Ankerwelle als eine Schneckenwelle 42 ausgebildet ist, welche mit einem Schneckenrad 44 kämmt. Das Schneckenrad 44 sitzt auf einem Drehzapfen 46, der in einem Gehäuse 49 gelagert ist, welches die Antriebsvorrichtung 12 umgibt. Etwa in Verlängerung der Drehachse 48 des Drehzapfens 46 befindet sich eine Welle 50, welche über ein Kalottenlager 52 in einer Exzenterbuchse 54 gelagert ist. Die Exzenterbuchse 54 ist topfförmig ausgebildet und das Kalottenlager 52 ist in den sich so ergebenden Topfboden 56 integriert. Dabei ist die Aufnahme des Kalottenlagers 52 in der Exzenterbuchse 54 so getroffen, daß eine die Welle 50 führende Zylinderbohrung 58 in dem Kalottenlager 52 exzentrisch zur äußeren Mantelfläche 60 der Exzenterbuchse 54 angeordnet ist. Weiter weist die topfförmige Exzenterbuchse 54 einen den Topfrand bildenden Ringbund 62 auf, dessen äußere Mantelfläche derart verzahnt ist, daß dieser Ringbund ein Schneckenrad bildet, welches mit einer Schneckenwelle 63 kämmt, die mit einem weiteren Antriebsmotor 64 wirkverbunden ist. Das Schneckenrad 62 bildet zusammen mit der Schnecke 63 eine Stellvorrichtung 66, durch welche die Exzenterbuchse 54 um die im Zentrum der Mantelfläche 60 liegende Achse gedreht werden kann. Da die Längsachse 68 der Welle 50 die Drehachse 48 des Schneckenrades 44 nahe der ihr zugewandten Stirnfläche des Schneckenrades 44 schneidet, die Welle 50 andererseits aber in der Exzenterbuchse 54 außermittig gelagert ist, fluchtet die Drehachse 48 des Schneckenrades 44 nicht mit der Längsachse 68 der Welle 50, welche im folgenden auch als Kurbeldrehachse bezeichnet wird. Die Welle 50 tritt mit einem Endabschnitt 70 aus dem Topfboden 56 heraus und ist mit einem Kurbelarm 72 versehen, dessen eines Ende fest mit der Welle 50 verbunden ist. An dem anderen, freien Ende des Kurbelarms 72 ist ein kalottenförmiger Kurbelzapfen 74 befestigt (Figuren 1 und 2) an dem die Schubstange 18 angreift. Aus Figur 2 ist weiter ersichtlich, daß das Schneckenrad 44 zwei axiale Vorsprünge 78 hat, auf denen ein aus einem federelastischen Material bestehender Ring 80 aufliegt und der über zwei Nieten 82 fest mit dem Schneckenrad 44 verbunden ist. Der federelastische Ring 80 stellt zusammen mit einem mit ihm verbundenen Bügel 83 — der seinerseits fest mit der Welle 50 verbunden ist — ein kardanisches Kupplungsmittel dar, durch welches das Schneckenrad 44 und die Welle 50 drehfest miteinander verbunden sind. Wie insbesondere die Figuren 3 und 4 zeigen, sitzt die Welle 50 mit ihrem einen Ende in einer Bohrung des Bügels 83. Weiter ist der Bügel 83 durch Nieten 84 mit dem Ring 80 verbunden. Die Anordnung der Verbindungsnieten 84 zwischen dem Ring 80 und dem Bügel 83 ist so getroffen, daß sie um 90 Grad versetzt zwischen den Befestigungsnieten 82 liegen, welche den Ring 80 an dem Schneckenrad 44 halten. Zwischen den axialen Vorsprüngen 78 ist der Ring 80 in bezug auf das Schneckenrad 44 frei und mit Abstand 81 von diesem angeordnet, so daß er genügend Spiel hat um im Rahmen seiner ihm eigenen Elastizität und Nachgiebigkeit den Fluchtungsfehler zwischen der Drehachse 48 des Schneckenrades 44 und der Kurbeldrehachse 68 auszugleichen.

Im folgenden soll der Betrieb der Wischvorrichtung beschrieben werden. Wenn die Kurbel 14 durch die Antriebsvorrichtung 12 in Richtung des Pfeiles 16 umlaufend angetrieben wird, befinden sich alle Bauelemente der Antriebsvorrichtung 12 in ihren in Figur 2 mit ausgezogenen Linien dargestellten Positionen. Dabei läuft der Kurbelzapfen 74 auf einer Bahn 88 um (Figur 7), die dort mit strichpunktierten Linien dargestellt ist. Die Kurbeldrehachse ist in Figur 7 ebenfalls mit der Bezugszahl 68 versehen worden. Solange die Kurbel 14 umläuft, pendelt das Wischblatt 26 über das Wischfeld 36 zwischen zwei Umkehrlagen, von denen die eine, sichtbare Umkehrlage in Figur 1 durch das Wischblatt 26 selbst markiert ist. Dabei wird der Fluchtungsfehler zwischen der Kurbeldrehachse 68 und der Schneckenraddrehachse 48 durch den elastischen Ring 80 ausgeglichen. Wenn die Antriebsvorrichtung 12 abgestellt wird, soll das Wischblatt 26 in eine sogenannte Ruhe- oder Parkstellung überführt werden, die sich, in der einen Pendelrichtung gesehen, vor dem Wischfeld 36 befindet. Diese Ruhestellung ist in Figur 1 mit gestrichelten Linien dargestellt und mit der Bezugszahl 27 versehen worden. Zum Überführen des Wischblatts 26 in seine Ruhestellung 27 wird die Stellvorrichtung 66 aktiviert, wobei die Exzenterbuchse 54 in Richtung des Pfeiles 55 (Figur 7) um 180° gedreht wird. Dadurch, daß die Lagerung 54, 58 der Welle 50 zur Drehführung 60 der Exzenterbuchse 54 außermittig liegt, wird die Kurbeldrehachse 68 der Welle 50 auf einer Kreisbahn verschoben, die in Figur 7 mit 57 bezeichnet ist. Die Stellvorrichtung 66 wird stillgesetzt, nachdem die Exzenterbuchse 54 um 180 Grad gedreht worden ist. Dabei ist die Anordnung der Exzenterbuchse 54 in dem Gehäuse 48 so getroffen, daß der Kurbelzapfen 74 den maximal möglichen Stellweg in einer Richtung ausführt. Dieser Stellweg ist in den Figuren 2 und 7 mit 90 bezeichnet worden. Er entspricht der Bogenbahn 57 in Figur 7, die ebenfalls als strichpunktierte Linie dargestellt worden ist. In der nun erreichten Stellposition nimmt die Kurbeldrehachse 68 eine Stellung ein, die in Figur 2 strichpunktiert dargestellt und mit 168 bezeichnet worden ist. Dabei nimmt der Kurbelzapfen 74 eine Zusatzstellung ein, die in Figur 2 strichpunktiert dargestellt und mit 174 bezeichnet worden ist. Projiziert man nun das eben Beschrieben in die Anordnung gemäß Figur 1 wird klar, daß durch eine Drehung der Exzenterbuchse 54 um 180 Grad die Kurbel 14 und mit dieser der Kurbelzapfen 74 in Richtung des Pfeiles 75 verschoben wird, so daß die Schwinge 20 in eine mit 120 bezeichnete und strichpunktiert dargestellter Position gelangt, welche das Wischblatt 26 in seine Ruhestellung 27 zwingt. Dabei legt das Wischblatt 26 eine Strecke 77 zurück, so daß es in der einen Pendelrichtung gesehen vor dem Wischfeld 36 abgelegt wird. Die Schaltung der Stellvorrichtung 66 ist so vorgenommen, daß beim Wiederbetätigen der Wischvorrichtung 10 die Exzenterbuchse 54 in Richtung des strichpunktierten Pfeiles 155 in Figur 7 um 180° weitergedreht wird, so daß die Kurbeldrehachse 68 wieder ihre Ausgangsposition 168 einnimmt. Dabei erfolgt die Rückstellbewegung auf der Bogenbahn 157.

Bei einer von der eben beschriebenen Ausführungsform abweichenden Ausführungsform gemäß Figur 5 ist die Welle 250 der nicht dargestellten Kurbel 14 abweichend von der eben beschriebenen Ausführungsform mit einem Fortsatz 92 versehen, mit welchem die Welle den Bügel 283 durchdringt. Dieser Fortsatz 92 ist als Kugelzapfen ausgebildet, der in einer Kugelpfanne 94 sitzt, welche an dem Schneckenrad 244 ausgebildet ist. Um dem Bügel 283 und der Welle 250 die nötige Bewegungsfreiheit in bezug auf das Schneckenrad 244 zu geben, ist der Bügel 283 in seinem Mittelbereich mit einer entsprechenden Doppelkröpfung 96 versehen, mit welcher er die Kugelpfanne 94 überquert. Durch diese Ausführung ergibt sich eine spezielle Lagerung der Welle 250 an ihrem einen Ende, während bei der Ausführungsform gemäß Figur 2 die Welle 50 lediglich über den Ring 58 kardanähnlich an dem Schneckenrad 44 gehalten ist.

Bei der weiteren Ausführungsform der Erfindung gemäß Figur 8 ist die Welle 350 der Kurbel 14 fest mit dem Schneckenrad 344 verbunden, wobei die Drehachsen von Welle und Schneckenrad miteinander fluchten. Damit die durch die Verdrehung (Pfeil 55) der Exzenterbuchse 54 bewirkte Stellbewegung 90 erfolgen kann, ist das Schneckenrad 344 über ein Pendelkugellager 345 auf einem gehäusefesten Lagerzapfen 347 pendelbar geführt. Das Pendelzentrum 349 liegt dabei im Bereich des Lagerzapfens 347. Der Außenring 351 des Pendelkugellagers 345 sitzt dabei in einer zentralen Ausnehmung des Schneckenrades 344, während der Innenring 353 des Pendelkugellagers 345 auf dem Lagerzapfen 347 sitzt. Die Verzahnung 346 des Schneckenrades 344 ist konvex ausgebildet und derart angeordnet, daß sich deren Krümmungszentrum zumindest annähernd mit dem Pendelzentrum 349 der Drehachse des Schneckenrades 344 deckt, so daß stets ein ordnungsgemäßes Zusammenwirken des Schneckengetriebes 42, 344 sichergestellt ist.

In der vorstehenden Beschreibung der Wirkungsweise der Wischvorrichtung ist diese so beschrieben worden, als wenn die Stellvorrichtung 66 erst nach Stillsetzen des Antriebsmotors 40 aktiviert werden könnten. Dies ist aber lediglich der besseren Übersichtlichkeit der Darstellung wegen geschehen. Es wird ausdrücklich darauf aufmerksam gemacht, daß die Stellvorrichtung 66 insbesondere beim Wiederanlauf der Wischvorrichtung, zusammen mit dem Antriebsmotor 40 eingeschaltet werden kann, so daß die Stellbewegung 157 (Figur 7) der Kurbeldrehachse 68 — die identisch ist mit der Stellbewegung des Kurbelzapfens 74 — der Pendelbewegung 32 der Schwinge 20 überlagert werden kann. Auf diese Weise wird eine rasche Säuberung des Wischfeldes gewährleistet.

Weitere Vorteile der erfindungsgemäßen Wischvorrichtung sind beispielsweise in der hohen Funktionssicherheit der Wischvorrichtung, welche durch funktionelle Trennung des Pendelantriebs von der Verschiebe-Stellbewegung des Wischers, erreicht wird, sowie in dem hohen Losbrechmoment zu sehen, das bei eingefrorener Wischanlage deren Anlauf gewährleistet.

## Patentansprüche

1. Wischvorrichtung für Scheiben von Kraftfahrzeugen, mit einem im Betrieb ein zwischen zwei Pendel-Umkehrlagen befindliches Wischfeld (36) überstreichenden Wischblatt (26), das über einen Wischerarm (24) mit einer Pendelwelle (22) fest verbunden ist und das in einer Ruhestellung (27) ablegbar ist, welche sich in der einen Pendelrichtung gesehen vor dem Wischfeld (36) befindet, mit einer Antriebsvorrichtung (12), die einen elektrischen Antriebsmotor (40) und eine mit diesem wirkverbundene, zu einem Pendelgetriebe gehörende Kurbel (14) aufweist, welches die Drehbewegung des Antriebsmotors (40) als Pendelbewegung auf die Pendelwelle (22) überträgt und die Kurbel (14) weiter mit einer Welle (50) in einer Exzenterbuchse (54) gelagert ist, die ihrerseits gegenüber einem Antriebsvorrichtungsgehäuse (49) zwischen zwei Stellungen geführt derart verdrehbar ist, daß die Drehachse der Kurbel (14) zwischen einer Pendel-Betriebsstellung und einer die Wischblatt-Ruhestellung (27) bewirkenden Zusatzstellung bewegbar ist, wobei die Exzenterbuchse (54) mit ihrer äußeren Mantelfläche (60) drehbar im Gehäuse (49) geführt und eine Antriebsvorrichtung (64) einer Stellvorrichtung (66) gehäusefest gehalten ist und die Welle (50) der Kurbel (14) in dem Topfboden (56) der Exzenterbuchse (54) gelagert ist, dadurch gekennzeichnet, daß die Exzenterbuchse (54) eine separate, von dem Pendelantrieb (40, 44, 80, 82, 50, 14) der Wischvorrichtung unabhängige Stellvorrichtung (66) aufweist, die einen elektrischen Antriebsmotor (64) und ein diesem nachgeordnetes Schneckengetriebe (62, 63) hat, dessen Schneckenrad (62) an der äußeren Mantelfläche (60) der topfförmig ausgebildeten Exzenterbusche (54) ausgebildet ist.

2. Wischvorrichtung nach Anspruch 1, bei der der elektrische Antriebsmotor (40) der Wischvorrichtung mit seiner als Schneckenwelle (42) ausgebildeten Ankerwelle mit der Verzahnung eines Schneckenrades (44) der Wischvorrichtung kämmt, dadurch gekennzeichnet, daß die Welle (50) der Kurbel (72, 74) als sich annähernd in Richtung der Drehachse (68) des an der äußeren Mantelfläche (60) der Exzenterbuchse (54) ausgebildeten Schneckenrades erstreckende Welle ausgebildet ist, daß der vom Schneckenrad (44) der Wischvorrichtung abgewandte Endabschnitt (20) der Welle (50) der Kurbel (14) in der zur Drehachse des Schneckenrades (44) der Wischvorrichtung exzentrisch angeordneten Buchse (54) gelagert ist und daß zwischen dem Schneckenrad (44) der Wischvorrichtung und dem diesem zugewandten Endabschnitt der Welle (50) der Kurbel (14) Kupplungsmittel (80) angeordnet sind, welche die Drehbewegung des Schneckenrades (44) der Wischvorrichtung auf die Welle (50) der Kurbel (14) übertragen und den Fluchtungsfehler von der Drehachse (48) des Schneckenrades (44) der Wischvorrichtung zur Drehachse (68) der Kurbel (14) ausgleichen.

3. Wischvorrichtung nach einem der Ansprüche 1 oder 2, dadurch gekennzeichnet, daß das Schneckenrad (62) der Stellvorrichtung (66) an der Mantelfläche eines zum Topfboden (56) parallelen Topfrandes (62) ausgebildet ist und daß im Topfboden (56) ein Kalottenlager (52) integriert ist, in dessen Zylinderbohrung (58) die Welle (50) der Kurbel (14) gelagert ist.

4. Wischvorrichtung nach einem der Ansprüche 2 oder 3, dadurch gekennzeichnet, daß die Kupplungsmittel durch einen federelastischen Ring (80) gebildet sind, der zwischen dem Schneckenrad (44) der Wischvorrichtung und der Welle (50) der Kurbel (14) deren Drehachsen (48, 68) umgebend angeordnet ist und daß der Ring (80), in dessen Umfangsrichtung gesehen, mit Abstand voneinanderliegende Befestigungen (82) zum Schneckenrad (44) der Wischvorrichtung und dazwischenliegende Verbindungen (84) zur Welle (50) aufweist.

5. Wischvorrichtung nach Anspruch 4, dadurch gekennzeichnet, daß der Ring (80) im Bereich der Befestigungen (82) an der ihm zugewandten Seite des Schneckenrades (44) der Wischvorrichtung anliegt und die dazwischenliegenden Abschnitte des Ringes (80) sich im Abstand (81) von dem Schneckenrad (44) der Wischvorrichtung befinden.

6. Wischvorrichtung nach Anspruch 5, dadurch gekennzeichnet, daß das Schneckenrad (44) der Wischvorrichtung im Bereich der Befestigungen (82) axiale Vorsprünge (78) zur Abstützung des Ringes (80) hat.

7. Wischvorrichtung nach einem der Ansprüche 4 bis 6, dadurch gekennzeichnet, daß die Verbindungen (84) zur Welle (50) der Kurbel (14) an einem Bügel (83) angeordnet sind, der seinerseits fest mit der Welle (50) verbunden ist.

8. Wischvorrichtung nach Anspruch 7, dadurch gekennzeichnet, daß zwischen dem Ring (80) und dem Schneckenrad (44) der Wischvorrichtung zwei einander diametral gegenüberliegende Befestigungen (82) angeordnet sind und daß dazu die Verbindungen (84) zwischen Bügel (83) und Ring (80) um 90 Grad versetzt sind.

9. Wischvorrichtung nach einem der Ansprüche 4 bis 8, dadurch gekennzeichnet, daß die Welle (50) der Kurbel (14) einen den Bügel (283) durchdringenden Fortsatz (92) hat, der als Kugelzapfen ausgebildet und mit einer Kugelpfanne (94) des Schneckenrades (244) der Wischvorrichtung gelagert ist.

10. Wischvorrichtung nach einem der Ansprüche 1 bis 9, dadurch gekennzeichnet, daß die Antriebsvorrichtung (12) und die Stellvorrichtung (66) gleichzeitig betätigbar sind.

11. Wischvorrichtung nach Anspruch 1, bei der der elektrische Antriebsmotor (40) der Wischvorrichtung mit seiner als Schneckenwelle (42) ausgebildeten Ankerwelle mit der Verzahnung eines Schneckenrades (44) der Wischvorrichtung kämmt, dadurch gekennzeichnet, daß die Welle (350) der Kurbel (14) sich annähernd in Richtung der Drehachse des Schneckenrades (344) der Wischvorrichtung erstreckt, daß der vom Schneckenrad der Wischvorrichtung abgewandte Endabschnitt der Welle (350) der Kurbel (14) in der zur Drehachse des Schneckenrades (344) der Wischvorrichtung exzentrisch angeordneten Buchse (54) gelagert ist, daß die Welle (350) der Kurbel (14) fest mit dem Schneckenrad (344) der Wischvorrichtung verbunden ist, wobei die Drehachse der Welle (350) mit der Drehachse des Schneckenrades (344) der Wischvorrichtung fluchtet und daß das Schneckenrad der Wischvorrichtung (344) an einem gestellfesten Lagerelement (347) derart geführt ist, daß seine Drehachse um ein im Bereich des Lagerelements liegendes Pendelzentrum (349) pendelbar ist.

12. Wischvorrichtung nach Anspruch 11, dadurch gekennzeichnet, daß das Lagerelement ein auf einem gestellfesten Zapfen (347) sitzendes Pendel-Wälzlager (345) ist, dessen Außenring (351) mit dem Schneckenrad (344) der Wischvorrichtung fest verbunden ist.

13. Wischvorrichtung nach einem der Ansprüche 11 oder 12, dadurch gekennzeichnet, daß die Verzahnung (346) des Schneckenrades (344) der Wischvorrichtung konvex ausgebildet ist und daß deren Krümmungszentrum wenigstens annähernd mit dem Pendelzentrum (349) der Drehachse des Schneckenrades (344) der Wischvorrichtung übereinstimmt.

## Claims

1. Wiper device for motor vehicle windscreens, having a wiper blade (26) which when in use sweeps over a wiped area (36) between two oscillation-reversal positions, is rigidly connected by a wiper arm (24) to a pendulum shaft (22), and has the capability to be stopped in a rest position (27) which, when seen in the one oscillation direction, is located before the wiped area (36), has a drive device (12), which has an electric drive motor (40) and a crank (14), forming part of an oscillating drive and connected in operation to the drive motor, which crank transmits the rotary movement of the drive motor (40) as an oscillating movement to the pendulum shaft (22), and the crank (14) being further supported by means of a shaft (50) in an eccentric bush (54) which, for its part, is rotationally guided with respect to a drive device casing (49) between two positions such that the axis of rotation of the crank (14) can be moved between an oscillation operating position and an additional position, acting as the wiper blade rest position (27), the eccentric bush (54), with its outer circumferential surface (60) being rotationally guided in the casing (49) and a drive device (64) of a positioning device (66) being held fixed within the casing and the shaft (50) of the crank (14) being supported in the pot-shaped base (56) of the eccentric bush (54), characterised in that the eccentric bush (54) has a separate positioning device (66), independent of the oscillating drive (40, 44, 80, 82, 50, 14) of the wiper device, which positioning device has an electric drive motor (64) and a worm drive (62, 63) arranged thereafter, whose worm gear (62) is formed on the outer circumferential surface (60) of the eccentric bush (54) which is designed in the shape of a pot.

2. Wiper device according to Claim 1, in which the electric drive motor (40) of the wiper device having its armature shaft designed as a worm shaft (42) engages with the teeth of a worm gear (44) of the wiper device, characterised in that the shaft (50) of the crank (72, 74) is designed as a shaft extending approximately in the direction of the axis of rotation (68) of the worm gear, formed on the outer circumferential surface (60) of the eccentric bush (54), in that the end section (20) of the shaft (50) of the crank (14) remote from the worm gear (44) of the wiper device is supported in the bush (54) arranged eccentrically to the axis of rotation of the worm gear (44) of the wiper device and in that, between the worm gear (44) of the wiper device and the end section of the shaft (50) of the crank (14) adjacent to it, means of coupling (80) are arranged, which transmit the rotary movement of the worm gear (44) of the wiper device to the shaft (50) of the crank (14) and compensate for the alignment error of the axis of rotation (48) of the worm gear (44) of the wiper device with respect to the axis of rotation (68) of the crank (14).

3. Wiper device according to one of Claims 1 or 2, characterised in that the worm gear (62) of the positioning device (66) is formed on the circumferential surface of a pot edge (62) parallel to the pot-shaped base (56) and in that a spherical bearing (52) is integrated in the pot-shaped base (56), in the cylindrical bore (58) of which bearing the shaft (50) of the crank (14) is supported.

4. Wiper device according to one of Claims 2 or 3, characterised in that the means of coupling are formed by a resilient ring (80), which is arranged between the worm gear (44) of the wiper device and the shaft (50) of the crank (14) around their axes of rotation (48, 68) and in that the ring (80), has attachments (82) to the worm gear (44) of the wiper device, at a distance from one another seen in the direction of its circumference, and has connections (84) to the shaft (50) located between these attachments.

5. Wiper device according to Claim 4, characterised in that the ring (80) bears installed in the region of the attachments (82) against the side of the worm gear (44) of the wiper device adjacent to it, and the sections of the ring (80) lying between these attachments are located at a distance (81) from the worm gear (44) of the wiper device.

6. Wiper device according to Claim 5, characterised in that the worm gear (44) of the wiper device has axial projections (78) for supporting the ring (80), in the region of the attachments (82).

7. Wiper device according to one of Claims 4 to 6, characterised in that the connections (84) to the shaft (50) of the crank (14) are arranged on a bracket (83), which, for its part, is rigidly connected to the shaft (50).

8. Wiper device according to Claim 7, characterised in that two attachments (82), lying diametrically opposed to each other, are arranged between the ring (80) and the worm gear (44) of the wiper device and in that, for this purpose, the connections (84) between the bracket (83) and the ring (80) are offset by 90°.

9. Wiper device according to one of Claims 4 to 8, characterised in that the shaft (50) of the crank (14) has an extension (92) penetrating through the bracket (283), which extension is designed as a ball pin and is supported by means of a ball socket (94) of the worm gear (244) of the wiper device.

10. Wiper device according to one of Claims 1 to 9, characterised in that the drive device (12) and the positioning device (66) can be operated simultaneously.

11. Wiper device according to Claim 1, in which the electric drive motor (40) of the wiper device having its armature shaft designed as a worm shaft (42) engages with the teeth of a worm gear (44) of the wiper device, characterised in that the shaft (350) of the crank (14) extends approximately in the direction of the axis of rotation of the worm gear (344) of the wiper device, in that the end section of the shaft (350) of the crank (14) remote from the worm gear of the wiper device is supported in the bush (54) arranged eccentrically to the axis of rotation of the worm gear (344) of the wiper device, in that the shaft (350) of the crank (14) is rigidly connected to the worm gear (344) of the wiper device, the axis of rotation of the shaft (350) being aligned to the axis of rotation of the worm gear (344) of the wiper device, and in that the worm gear of the wiper device (344) is supported on a bearing element (347), fixed to the frame, in such a manner that its axis of rotation can oscillate about a centre of oscillation (349) lying in the region of the bearing element.

12. Wiper device according to Claim 11, characterised in that the bearing element is a self-aligning roller bearing (345), seated on a pin (347) fixed to the frame, the outer ring (351) of which bearing is rigidly connected to the worm gear (344) of the wiper device.

13. Wiper device according to one of Claims 11 or 12, characterised in that the teeth (346) of the worm gear (344) of the wiper device are designed to be convex and in that their centre of curvature corresponds at least approximately to the centre of oscillation (349) of the axis of rotation of the worm gear (344) of the wiper device.

## Revendications

1. Essuie-glace pour véhicules automobiles, avec une lame d'essuyage (26) qui, lorsqu'elle fonctionne, balaie une aire d'essuyage (36) se trouvant entre deux positions d'inversion du mouvement pendulaire et qui, par l'intermédiaire d'un bras d'essuie-glace (24), est solidaire d'un arbre (22) animé d'un mouvement pendulaire et est susceptible d'être arrêtée dans une position de repos (27) qui, vue dans l'un des sens du mouvement pendulaire, se trouve devant l'aire d'essuyage (36), avec un dispositif d'entraînement (12), qui comporte un moteur électrique d'entraînement (40) et une manivelle (14) reliée fonctionnellement à celui-ci, qui fait partie d'un mécanisme pendulaire et qui transmet à l'arbre (22), sous la forme de mouvement pendulaire, le mouvement de rotation du moteur d'entraînement (40), tandis que la manivelle (14) est en outre montée avec un arbre (50) dans un coussinet d'excentrique (54), qui, de son côté, est susceptible de pivoter par rapport à un carter (49) du dispositif d'entraînement en étant guidée entre deux positions, de sorte que l'axe de rotation de la manivelle (14) est susceptible d'être déplacé entre une position de fonctionnement pendulaire et une position de repos (27) de la lame d'essuyage, tandis que le coussinet d'excentrique (54) est guidé par sa surface enveloppe externe (60) de façon à pouvoir tourner dans le carter (49) et qu'un dispositif d'entraînement (64) d'un dispositif de réglage (66) est maintenu fixe dans le carter, cependant que l'arbre (50) de la manivelle (14) est monté dans le fond (56) de la cuvette du coussinet d'excentrique (54), essuie-glace caractérisé en ce que le coussinet d'excentrique (54) comporte un dispositif de réglage (66) distinct, indépendant de l'entraînement pendulaire (40, 44, 80, 82, 50, 14) de l'essuie-glace, et qui comporte un moteur électrique d'entraînement (64) et un mécanisme à vis sans fin (62, 63) disposé à la suite de celui-ci et dont la roue à denture hélicoïdale (62) est réalisée sur la surface-enveloppe externe (60) du coussinet d'excentrique (54) en forme de cuvette.

2. Essuie-glace selon la revendication 1, dans lequel le moteur électrique (40) d'entraînement de l'essuie-glace engrène, avec son arbre d'induit réalisé sous la forme d'un arbre-vis (42), avec la denture d'une roue hélicoïdale (44) de l'essuie-glace, essuie-glace caractérisé en ce que l'arbre (50) de la manivelle (72, 74) est réalisé sous la forme d'un arbre s'étendant approximativement en direction de l'axe de rotation (68) de la roue hélicoïdale réalisée sur la surface enveloppe externe (60) du coussinet d'excentrique (54), en ce que la partie terminale (20), opposée à la roue hélicoïdale (44) de l'essuie-glace, de l'arbre (50) de la manivelle (14) est montée dans le coussinet (54) disposé excentriquement par rapport à l'axe de rotation de la roue hélicoïdale (44) de l'essuie-glace, et en ce que, entre la roue hélicoïdale (44) de l'essuie-glace et la partie terminale, tournée vers lui, de l'arbre (50) de la manivelle (14), sont disposés des moyens d'accouplement (80) qui transmettent le mouvement de rotation de la roue hélicoïdale (44) de l'essuie-glace à l'arbre (50) de la manivelle (14) et qui compensent les défauts d'alignement de l'axe de rotation (48) de la roue hélicoïdale (44) de l'essuie-glace par rapport à l'axe de rotation (68) de la manivelle (14).

3. Essuie-glace selon une des revendications 1 ou 2, caractérisé en ce que la roue hélicoïdale (62) du dispositif de réglage (66) est réalisée sur la surface-enveloppe d'un bord de cuvette (62) parallèle au fond de cuvette (56), et en ce que, dans le fond (56) de la cuvette, est intégré un palier sphérique (52), dans l'alésage cylindrique (58) duquel est monté l'arbre (50) de la manivelle (14).

4. Essuie-glace selon une des revendications 2 ou 3, caractérisé en ce que les moyens d'accouplement sont constitués par un anneau à déformation élastique (80) qui est disposé entre la roue hélicoïdale (44) de l'essuie-glace et l'arbre (50) de la manivelle (14) en entourant les axes de rotation (48, 68) de celle-ci, et en ce que l'anneau (80), vu dans sa direction périphérique, comporte des fixations (82) à la roue hélicoïdale (44) de l'essuie-glace, et comporte entre ces fixations, placées à une certaine distance l'une de l'autre, des liaisons (84) à l'arbre (50).

5. Essuie-glace selon la revendication 4, caractérisé en ce que l'anneau (80) s'applique, au voisinage des fixations (82), contre la face tournée vers lui de la roue hélicoïdale (44) de l'essuie-glace, tandis que les parties de l'anneau (80) placées entre ces fixations se trouvent à une certaine distance (81) de la roue hélicoïdale (44) de l'essuie-glace.

6. Essuie-glace selon la revendication 5, caractérisé en ce que la roue hélicoïdale (44) de l'essuie-glace comporte, au voisinage des fixations (82), des saillies axiales (78) pour servir d'appuis à l'anneau (80).

7. Essuie-glace selon une des revendications 4 à 6, caractérisé en ce que les liaisons (84) à l'arbre (50) de la manivelle (14) sont disposées sur une barrette (83) qui, de son côté, est solidaire de l'arbre (50).

8. Essuie-glace selon la revendication 7, caractérisé en ce qu'entre l'anneau (80) et la roue hélicoïdale (44) de l'essuie-glace sont disposées deux fixations (82) diamétralement opposées l'une à l'autre, et en ce que, par rapport à ces fixations, les liaisons (84) entre la barrette (83) et l'anneau (80) sont décalées de 90°.

9. Essuie-glace selon une des revendications 4 à 8, caractérisé en ce que l'arbre (50) de la manivelle (14) a un prolongement (92) traversant la barrette (283) et qui revêt la forme d'un tourillon sphérique monté dans un coussinet sphérique (94) de la roue hélicoïdale (244) de l'essuie-glace.

10. Essuie-glace selon une des revendications 1 à 9, caractérisé en ce que le dispositif d'entraînement (12) et le dispositif de réglage (66) sont susceptibles d'être actionnés simultanément.

11. Essuie-glace selon la revendication 1, dans lequel le moteur électrique (40) d'entraînement de l'essuie-glace engrène, par son arbre d'induit réalisé sous la forme d'un arbre-vis (42), avec la denture d'une roue hélicoïdale (44) de l'essuie-glace, essuie-glace caractérisé en ce que l'arbre (350) de la manivelle (14) s'étend approximativement en direction de l'axe de rotation de la roue hélicoïdale (344) de l'essuie-glace, en ce que la partie terminale, opposée à la roue hélicoïdale de l'essuie-glace, de l'arbre (350) de la manivelle (14) est montée dans le coussinet (54) disposé excentriquement par rapport à l'axe de rotation de la roue hélicoïdale (344) de l'essuie-glace, en ce que l'arbre (350) de la manivelle (14) est solidaire de la roue hélicoïdale (344) de l'essuie-glace, tandis que l'axe de rotation de l'arbre (350) est aligné avec l'axe de rotation de la roue hélicoïdale (344) de l'essuie-glace, et que cette roue hélicoïdale (344) de l'essuie-glace est guidée sur un élément de palier (347) solidaire du carter, de façon que son axe de rotation puisse osciller sur un centre d'oscillation (349) se situant dans la zone de l'élément de palier (347).

12. Essuie-glace selon la revendication 11, caractérisé en ce que l'élément de palier est un roulement à rotule (345) placé sur un tourillon (347) solidaire du carter, et dont la bague externe (351) est solidaire de la roue hélicoïdale (344) de l'essuie-glace.

13. Essuie-glace selon une des revendications 11 ou 12, caractérisé en ce que la denture (346) de la roue hélicoïdale (344) de l'essuie-glace est convexe, et en ce que son centre de courbure coïncide, au moins approximativement, avec le centre d'oscillation (349) de l'axe de rotation de la roue hélicoïdale (344) de l'essuie-glace.

Fig. 1

Fig. 2

Fig. 3

Fig. 4

Fig. 5

Fig. 6

Fig. 7

Fig. 8